# EUROPEAN PATENT SPECIFICATION

(11) **EP 2 717 362 B1**
(45) Date of publication and mention of the grant of the patent: **24.02.2016**
(21) Application number: 12792085.8
(22) Date of filing: 29.03.2012
(51) Int. Cl.: H01M 4/587, H01M 4/505, H01M 4/525, H01M 10/0525, H01M 4/583

(54) **ACTIVE MATERIAL FOR SECONDARY BATTERIES, AND SECONDARY BATTERY USING SAME**
AKTIVMATERIAL FÜR SEKUNDÄRBATTERIEN UND SEKUNDÄRBATTERIE DAMIT
MATÉRIAU ACTIF POUR BATTERIES SECONDAIRES, ET BATTERIE SECONDAIRE UTILISANT LEDIT MATÉRIAU

(30) Priority: 30.05.2011 JP 2011120143
(43) Date of publication of application: 09.04.2014
(73) Proprietor: NEC Corporation, Tokyo 108-8001 (JP)
(72) Inventor: NOGUCHI, Takehiro, Tokyo 108-8001 (JP); SASAKI, Hideaki, Tokyo 108-8001 (JP); UEHARA, Makiko, Tokyo 108-8001 (JP)
(74) Representative: Glawe, Delfs, Moll
(86) International application number: PCT/JP2012/058344
(87) International publication number: WO 2012/165020

(56) References cited:
- EP-A2- 1 304 752
- JP-A- 2003 229 130
- JP-A- 2003 263 983
- JP-A- 2005 166 558
- JP-A- 2005 235 628
- JP-A- 2007 200 646
- JP-A- 2009 059 711
- JP-A- 2010 282 858
- JP-A- 2011 023 335
- JP-A- 2011 096 672
- KR-A- 20080 088 177
- US-A1- 2004 202 938

## Description

### Technical Field

This exemplary embodiment relates to an active material for a secondary battery, and particularly to an active material for a secondary battery containing a spinel-type manganese complex oxide with high energy density, and a secondary battery using the same.

### Background Art

Lithium secondary batteries and lithium ion secondary batteries (hereinafter referred to as secondary batteries) are characterized by small size and large capacity, and widely used as power supplies for cellular phones, notebook computers, and the like.

As the active materials of lithium ion secondary batteries, currently, LiCoO₂ is mainly used for positive electrodes. However, for LiCoO₂, the safety in a charged state is not always sufficient, and in addition, the price of the Co raw material is high. Therefore, a search for new positive electrode active materials replacing LiCoO₂ has been vigorously promoted.

The use of LiNiO₂ as a material having the same layered crystal structure as LiCoO₂ has been studied. However, although the capacity of LiNiO₂ is high, its potential is lower than that of LiCoO₂, and in addition, there is also a problem in terms of crystal stability during charge.

In addition, another problem is that a large amount of the Ni raw material is used, and the price is high.

The use of LiMn₂O₄ of spinel structure as another positive electrode active material has also been actively studied. The Mn raw material is relatively inexpensive, and advantageous in terms of price. However, for LiMn₂O₄, performance deterioration accompanying cycles, or a decrease in capacity at high temperature occurs. This is due to the instability of trivalent Mn, and is considered to be because when the average valence of Mn ions changes between trivalent and tetravalent, Jahn-Teller distortion occurs in the crystal and the stability of the crystal structure decreases.

Because of such, so far, for the purpose of increasing the reliability of batteries, studies to replace trivalent Mn by another element to improve structural stability have been performed. For example, Patent Literature 1 discloses a positive electrode active material in which trivalent Mn contained in LiMn₂O₄ is replaced by another metal. In other words, the Claims in the publication describe a secondary battery including, as a positive electrode active material, a manganese complex oxide having a spinel structure and represented by the composition formula LiMₓMn₂₋ₓO₄ (M is one or more selected from Al, B, Cr, Co, Ni, Ti, Fe, Mg, Ba, Zn, Ge, and Nb, and 0.01 ≤ x ≤ 1). The section of Detailed Description of the Invention in the publication specifically discloses an example using LiMn_{1.75}Al_{0.25}O₄ as a positive electrode active material.

However, when trivalent Mn is replaced by another element as described above, a decrease in discharge capacity is a problem. LiMn₂O₄ undergoes the valence change of Mn shown in the following formula with charge and discharge.

Li⁺Mn³⁺Mn⁴⁺O²⁻₄ -> Li⁺ + Mn⁴⁺₂O²⁻₄

As shown in the above formula, trivalent Mn and tetravalent Mn are contained in LiMn₂O₄, and by a change from the trivalent Mn of these to tetravalent Mn, discharge occurs. Therefore, replacing trivalent Mn by another element necessarily causes a decrease in discharge capacity. In other words, when an attempt is made to increase the structural stability of the positive electrode active material to improve the reliability of the battery, the decrease in discharge capacity is significant, and it is difficult to achieve both.

The above-described positive electrode active material in which trivalent Mn contained in LiMn₂O₄ is replaced by another element forms a lithium secondary battery with an electromotive force of less than 4.5 V. A positive electrode active material exhibiting an electromotive force of less than 4.5 V is referred to as a 4 V class positive electrode active material. On the other hand, as the technique of an approach different from this, studies have been performed to replace part of Mn in LiMn₂O₄ by Ni, Co, Fe, Cu, Cr, or the like to increase charge and discharge potential to increase energy density. These form lithium secondary batteries with the so-called 5 V class electromotive force. LiNi_{0.5}Mn_{1.5}O₄ will be described below as an example.

LiNi_{0.5}Mn_{1.5}O₄ ideally undergoes the valence change shown in the following formula with charge and discharge.

Li⁺Ni²⁺0_{.5}Mn⁴⁺_{1.5}O²⁻₄ -> Li⁺ + Ni⁴⁺_{0.5}Mn⁴⁺_{1.5}O²⁻₄

As shown in the above formula, for LiNi_{0.5}Mn_{1.5}O₄, by a change from divalent Ni to tetravalent Ni, discharge occurs. By using Ni as an element involved in charge and discharge in this manner, operation at a high potential of 4.5 V or more with respect to lithium metal is possible. A positive electrode active material exhibiting an electromotive force of 4.5 V or more is referred to as a 5 V class positive electrode active material. Patent Literatures 2 to 7 disclose specific examples of such positive electrode active materials.

### Citation List

### Patent Literature

Patent Literature 1: JP2001-176557A
Patent Literature 2: JP9-147867A
Patent Literature 3: JP2002-158008A
Patent Literature 4: JP2002-63900A
Patent Literature 5: JP2003-197194A
Patent Literature 6: JP2007-200646A
Patent Literature 7: JP2003-229130A

### Summary of Invention

### Technical Problem

However, when the positive electrode active materials specifically put into practice in Patent Literatures 2 to 7 are used, high charge and discharge capacity is obtained at an electromotive force of 4.5 V or more with respect to lithium, but there is still room for improvement in terms of the life of secondary batteries.

This exemplary embodiment has been made in view of such circumstances, and it is an object of this exemplary embodiment to provide an active material for a secondary battery with improved life characteristics.

### Solution to Problem

An active material for a secondary battery according to this exemplary embodiment is represented by the following formula (I):

Liₐ₁(Niₓ₁Mn_{2-x1-y1-z1}M1_{y1}M2_{z1})O₄ (I)

wherein 0.4 ≤ x1 ≤ 0.6, 0 < y1, 0 < z1, x1 + y1 + z1 < 2, and 0 ≤ a1 ≤ 1.2; M1 is at least one selected from Si and Ti, and M2 is at least one selected from Li, B, Na, K, and Ca.

A secondary battery according to this exemplary embodiment includes the active material for a secondary battery according to this exemplary embodiment.

### Advantageous Effect of Invention

According to this exemplary embodiment, an active material for a secondary battery with improved life characteristics can be provided.

### Brief Description of Drawing

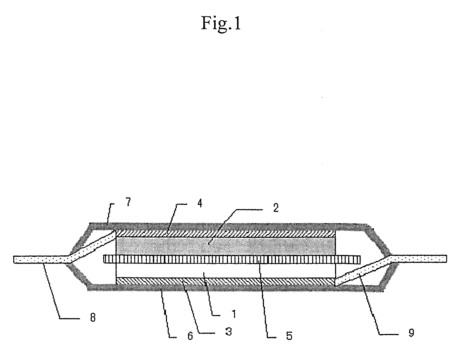

[Figure 1] Figure 1 is a cross-sectional view of one example of a secondary battery according to this exemplary embodiment.

### Description of Embodiment

An active material for a secondary battery according to this exemplary embodiment (i) contains Ni, and the valence change of Ni from 2 to 4 is involved in charge and discharge, and therefore, the potential of the charge and discharge is as high as 4.5 V or more with respect to lithium. (ii) By including M1 in the above formula (I) the life characteristics are improved. (iii) By including M3 in the above formula (I), with a predetermined composition, the life characteristics are further improved. These conditions can provide an active material for a secondary battery with high energy density operating at high voltage, the active material for a secondary battery having improved life characteristics. For the above (ii) and (iii), it is presumed that by the introduction of the above elements, the crystallinity increases, and the life characteristics are improved.

According to this exemplary embodiment, the energy density of a secondary battery is high, and therefore, a miniaturized secondary battery can be provided. In addition, the secondary battery operates at high voltage, and therefore, the number of series in an assembled battery can be reduced. Further, a secondary battery with high life characteristics can be provided. The details of this exemplary embodiment will be described below.

### [Active Material for Secondary Battery]

The active material for a secondary battery according to this exemplary embodiment is represented by the following formula (I):

Liₐ₁(Niₓ₁Mn_{2-x1-y1-z1}M1_{y1}M2_{z1})O₄ (I)

wherein 0.4 ≤ x1 ≤ 0.6, 0 < y1, 0 < z1, x1 + y1 + z1 < 2, and 0 ≤ a1 ≤ 1.2 M1 is at least one selected from Si and Ti; and M2 is at least one selected from Li, B, Na, K, and Ca.

In the above formula (I), M1 includes at least one selected from Si and Ti. In addition, M2 includes at least one selected from Li, B, Na, K, and Ca. As a high voltage spinel-type active material, LiNiₓMn₂₋ₓO₄ in which part of Mn is replaced by Ni is known. In this exemplary embodiment, by further replacing part of Mn by M1 and M2, when the compound is used as an active material for a secondary battery, longer life of the secondary battery can be achieved. Further, for the active material for a secondary battery represented by the above formula (I), higher charge and discharge voltage and higher energy density than those of LiMn₂O₄ used so far are obtained.

From the viewpoint that a secondary battery exhibiting high energy density, high electromotive force, and high capacity is obtained, the composition ratio x1 of Ni is 0.4 ≤ x1 ≤ 0.6. The composition ratio x1 of Ni is preferably 0.45 ≤ x1 ≤ 0.55, more preferably 0.48 ≤ x1 ≤ 0.52.

M1 in the above formula (I) is at least one selected from Si and Ti, and the composition ratio y1 of M1 is 0 < y1. When Mn is replaced by a tetravalent element of Si or Ti, the valence change of Ni due to the insertion and elimination of Li does not occur. Therefore, even if a large amount of Mn is replaced by M1, equivalent energy density can be achieved. From the viewpoint of improving the life characteristics of the secondary battery, the composition ratio y1 of M1 is preferably 0 < y1 ≤ 0.3. The composition ratio y1 of M1 is more preferably 0.02 ≤ y1 ≤ 0.25, still more preferably 0.05 ≤ y1 ≤ 0.22.

M2 in the above formula (I) is at least one selected from Li, B, Na, K, and Ca, and the composition ratio z1 of M2 is 0 < z1. When Mn is replaced by a divalent or lower-valent element, such as Li, B, Na, K, and Ca, shift may occur from an ideal Ni valence change. Therefore, from the viewpoint of improving the life characteristics of the secondary battery, the composition ratio z1 of M2 is preferably 0 < z1 < 0.03. The composition ratio z1 of M2 is more preferably 0.001 ≤ z1 ≤ 0.025, still more preferably 0.005 ≤ z1 ≤ 0.02. In the above formula (I), x1, y1, and z1 satisfy the relationship of x1 + y1 + z1 < 2.

The composition ratio a1 of Li in the above formula (I) changes by the insertion and elimination of Li due to charge and discharge. The composition ratio a1 can change within the range of 0 ≤ a1 ≤ 1.2, and generally changes within the range of 0 ≤ a1 ≤ 1.

In the above formula (I), when M1 is Ti, M2 can be at least one selected from Na, K, and Ca.

In addition, in the above formula (I), when M1 is Si, M2 can be at least one selected from Li, Na, K, and Ca.

In the above formula (I), the ratio of x1 to z1 (x1/z1) is preferably 20 ≤ x1/z1 ≤ 1000. The ratio of x1 to z1 is more preferably 22 ≤ x1/z1 ≤ 500, still more preferably 25 ≤ x1/z1 ≤ 100.

In the above formula (I), the ratio of y1 to z1 (y1/z1) is preferably 6 ≤ y1/z1 ≤ 1000. The ratio of y1 to z1 is more preferably 7 ≤ y1/z1 ≤ 100, still more preferably 10 ≤ y1/z1 ≤ 50.

In the above formula (I), the ratio of x1 to y1 (x1/y1) is preferably 3 ≤ x1/y1 ≤ 1000. The ratio of x1 to y1 is more preferably 4 ≤ x1/y1 ≤ 50, still more preferably 5 ≤ x1/y1 ≤ 10.

The active material for a secondary battery according to a reference embodiment is represented by the following formula (II):

Liₐ₂(Niₓ₂Mn_{2-x2-y2-z2}M3_{y2}M4_{z2})O₄ (II)

wherein 0 < x2, 0 < y2, 0 < z2 < 0.03, x2 + y2 + z2 < 2, and 0 ≤ a2 ≤ 2; M3 is at least one selected from Si and Ti; and M4 is at least one selected from Li, B, Mg, Al, Na, K, and Ca, and includes at least Al.

Also for the active material for a secondary battery represented by the above formula (II), longer life of the secondary battery can be achieved, and high charge and discharge voltage and high energy density are obtained, as for the active material for a secondary battery represented by the above formula (I).

The composition ratio x2 of Ni in the above formula (II) is 0 < x2. From the viewpoint that a secondary battery exhibiting high energy density, high electromotive force, and high capacity is obtained, the composition ratio x2 of Ni is preferably 0.4 ≤ x2 ≤ 0.6. The composition ratio x2 of Ni is more preferably 0.45 ≤ x2 ≤ 0.55, still more preferably 0.48 ≤ x2 ≤ 0.52.

M3 in the above formula (II) is at least one selected from Si and Ti, and the composition ratio y2 of M3 is 0 < y2. M3 can also be Si. When Mn is replaced by a tetravalent element of Si or Ti, there is no change in the valence change of Ni due to the insertion and elimination of Li. Therefore, even if a large amount of Mn is replaced by M3, equivalent energy density can be achieved. From the viewpoint of improving the life characteristics of the secondary battery, the composition ratio y2 of M3 is preferably 0 < y2 ≤ 0.3. The composition ratio y2 of M3 is more preferably 0.02 ≤ y2 ≤ 0.25, still more preferably 0.05 ≤ y2 ≤ 0.22.

M4 in the above formula (II) is at least one selected from Li, B, Mg, Al, Na, K, and Ca, and includes at least Al. M4 can also be Al. The composition ratio z2 of M4 is 0 < z2 < 0.03 because when Mn is replaced by a trivalent or lower-valent element, such as Li, B, Mg, Al, Na, K, and Ca, shift may occur from an ideal Ni valence change, and also from the viewpoint of improving the life characteristics of the secondary battery. From the viewpoint of further improving the life characteristics, the composition ratio z2 of M4 is preferably 0.001 ≤ z1 ≤ 0.025, more preferably 0.05 ≤ z1 ≤ 0.02. In the above formula (II), x2, y2, and z2 satisfy the relationship of x2 + y2 + z2 < 2.

The composition ratio a2 of Li in the above formula (II) changes by the insertion and elimination of Li due to charge and discharge. The composition ratio a2 can change within the range of 0 ≤ a2 ≤ 2, can also change within the range of 0 ≤ a2 ≤ 1.2, and generally changes within the range of 0 ≤ a2 ≤ 1.

In the above formula (II), the ratio of x2 to z2 (x2/z2) is preferably 20 ≤ x2/z2 ≤ 1000. The ratio of x2 to z2 is more preferably 22 ≤ x2/z2 ≤ 100, still more preferably 25 ≤ x2/z2 ≤ 60.

In the above formula (II), the ratio of y2 to z2 (y2/z2) is preferably 6 ≤ y2/z2 ≤ 1000. The ratio of y2 to z2 is more preferably 7 ≤ y2/z2 ≤ 100, still more preferably 10 ≤ y2/z2 ≤ 50.

In the above formula (II), the ratio of x2 to y2 (x2/y2) is preferably 3 ≤ x2/y2 ≤ 1000. The ratio of x2 to y2 is more preferably 4 ≤ x2/y2 ≤ 100, still more preferably 5 ≤ x2/y2 ≤ 50.

In this reference embodiment, a similar effect can be obtained even in a configuration in which there is a small amount of oxygen deficiency in part of oxygen in the above formula (I) and the above formula (II), or part of oxygen is replaced by a halogen, such as F or Cl, or a chalcogen, such as sulfur or selenium, in a slight amount.

For example, the active material for a secondary battery according to this reference embodiment may be represented by the following formula (III):

Liₐ₃(Niₓ₃Mn_{2-x3-y3-z3}M5_{y3}M6_{z3})(O_{4-w3}M7_{w3}) (III)

wherein 0 < x3, 0 < y3, 0 < z3, x3 + y3 + z3 < 2, 0 ≤ a3 ≤ 2, and 0 ≤ w3 ≤ 1; M5 is at least one selected from Si and Ti; M6 is at least one selected from Li, B, Mg, Na, K, and Ca; and M7 is at least one of F and Cl.

In addition, the active material for a secondary battery according to this exemplary embodiment may be represented by the following formula (IV):

Liₐ₄(Niₓ₄Mn_{2-x4-y4-z4}M8_{y4}M9_{z4})(O_{4-w4}M10_{w4}) (IV)

wherein 0 < x4, 0 < y4, 0 < z4 < 0.03, x4 + y4 + z4 < 2, 0 ≤ a4 ≤ 2, and 0 ≤w4 ≤ 1; M8 is at least one selected from Si and Ti; M9 is at least one selected from Li, B, Mg, Al, Na, K, and Ca, and includes at least Al; and M10 is at least one of F and Cl.

Next, a method for preparing the active material for a secondary battery according to this exemplary and reference embodiment will be described. As a Li raw material, Li₂CO₃, LiOH, Li₂O, Li₂SO₄, and the like can be used. Among these, particularly Li₂CO₃ and LiOH can be preferably used. As a Mn raw material, various Mn oxides, such as electrolytic manganese dioxide (EMD), Mn₂O₃, Mn₃O₄, and CMD (chemical manganese dioxide), MnCO₃, MnSO₄, and the like can be used. As a Ni raw material, NiO, Ni(OH)₂, NiSO₄, NiCO₃, and the like can be used. As a Mg raw material, MgO, Mg(OH)₂, and the like can be used. As a Na raw material, Na₂O, NaOH, and the like can be used. As a B raw material, B₂O₃ and the like can be used. As an Al raw material, Al₂O₃, Al(OH)₃, and the like can be used. As a K raw material, K₂O, KOH, and the like can be used. As a Ca raw material, CaO, Ca(OH)₂, and the like can be used. As a Si raw material, SiO, Si(OH)₄, and the like can be used. As a Ti raw material, TiO₂, Ti(OH)₄, and the like can be used. For the raw material of each element, one may be used, or two or more may be used in combination.

These raw materials are weighed so as to provide a target metal composition ratio, and mixed. The mixing can be performed by grinding and mixing by a ball mill, a jet mill, or the like. The obtained mixed powder is fired at a temperature of 400°C to 1200°C in air or in oxygen to obtain an active material for a secondary battery. The firing temperature is preferably high in order to diffuse the elements. However, if the firing temperature is too high, oxygen deficiency may occur and thus the battery characteristics may decrease in some cases. Therefore, the firing temperature is preferably 400°C to 1000°C.

The specific surface area of the active material for a secondary battery is preferably 0.01 m²/g or more and 10 m²/g or less. By setting the specific surface area to 0.01 m²/g or more, a decrease in the charge and discharge rate characteristics and the like of the secondary battery can be prevented. On the other hand, by setting the specific surface area to 10 m²/g or less, the amount of the binding agent used can be small, which is advantageous in terms of the capacity density of the positive electrode. The specific surface area is more preferably 0.05 m²/g or more and 3 m²/g or less. The specific surface area is a value measured by the BET method.

The active material for a secondary battery can be used as a positive electrode active material for a secondary battery, and can be used for both of a lithium secondary battery and a lithium ion secondary battery.

### [Electrode for Secondary Battery]

An electrode for a secondary battery according to this exemplary embodiment includes the active material for a secondary battery according to this exemplary embodiment. The electrode for a secondary battery according to this exemplary embodiment can be fabricated by providing the active material for a secondary battery according to this exemplary embodiment on an electrode current collector. For example, when a positive electrode for a secondary battery is fabricated, it can be fabricated by mixing the active material for a secondary battery according to this exemplary embodiment, a conductivity-providing agent, and a binding agent, and applying the mixture onto a positive electrode current collector. As the conductivity-providing agent, for example, carbon materials as well as powders of metal substances, such as Al, and conductive oxides can be used. As the binding agent, polyvinylidene fluoride (PVDF) and the like can be used. As the positive electrode current collector, metal thin films mainly containing Al and the like can be used.

The amount of the conductivity-providing agent added can be set to 1 to 10% by mass. By setting the amount added to 1% by mass or more, sufficient conductivity can be maintained. In addition, by setting the amount added to 10% by mass or less, the proportion of the mass of the active material can be increased, and therefore, the capacity per mass can be increased. The amount of the binding agent added can be set to 1 to 10% by mass. By setting the amount added to 1% by mass or more, the occurrence of electrode peeling can be prevented. In addition, by setting the amount added to 10% by mass or less, the proportion of the mass of the active material can be increased, and therefore, the capacity per mass can be increased.

### [Secondary Battery]

A secondary battery according to this exemplary embodiment includes the active material for a secondary battery according to this exemplary embodiment. For example, the secondary battery according to this exemplary embodiment includes the above positive electrode for a secondary battery and a negative electrode including a negative electrode active material capable of intercalating and releasing lithium. Such a separator that does not make electrical connection is sandwiched between the positive electrode for a secondary battery and the negative electrode, and the positive electrode for a secondary battery and the negative electrode are in a state of being immersed in a lithium ion-conducting electrolytic solution. These are sealed in a battery case that is an outer package.

One example of the configuration of the secondary battery according to this exemplary embodiment is shown in Figure 1. A positive electrode active material layer 1 containing the active material for a secondary battery according to this exemplary embodiment is formed on a positive electrode current collector 3 to form a positive electrode. In addition, a negative electrode active material layer 2 is formed on a negative electrode current collector 4 to form a negative electrode. These positive electrode and negative electrode are disposed opposed to each other via a separator 5 in a state of being immersed in an electrolytic solution. These are housed in outer package laminates 6 and 7. The positive electrode is connected to a positive electrode tab 9, and the negative electrode is connected to a negative electrode tab 8.

By applying voltage to the positive electrode and the negative electrode, lithium ions are eliminated from the positive electrode active material, and the lithium ions are intercalated into the negative electrode active material to reach a charged state. In addition, by making electrical contact between the positive electrode and the negative electrode outside the battery, lithium ions are released from the negative electrode active material, and the lithium ions are intercalated into the positive electrode active material, contrary to during charge, and thus, discharge occurs.

As the electrolytic solution used in the secondary battery according to this exemplary embodiment, a solution obtained by dissolving a lithium salt as an electrolyte in a solvent can be used. As the solvent, aprotic organic solvents, such as cyclic carbonates, such as propylene carbonate (PC), ethylene carbonate (EC), butylene carbonate (BC), and vinylene carbonate (VC), chain carbonates, such as dimethyl carbonate (DMC), diethyl carbonate (DEC), ethyl methyl carbonate (EMC), and dipropyl carbonate (DPC), aliphatic carboxylates, such as methyl formate, methyl acetate, and ethyl propionate, γ-lactones, such as γ-butyrolactone, chain ethers, such as 1,2-diethoxyethane (DEE) and ethoxymethoxyethane (EME), cyclic ethers, such as tetrahydrofuran and 2-methyltetrahydrofuran, dimethyl sulfoxide, 1,3-dioxolane, formamide, acetamide, dimethylformamide, dioxolane, acetonitrile, propylnitrile, nitromethane, ethyl monoglyme, phosphate triester, trimethoxymethane, dioxolane derivatives, sulfolane, methylsulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, N-methylpyrrolidone, fluorinated carbonates, fluorinated carboxylates, and other fluorinated compounds, can be used. One of these solvents may be used, or two or more of these solvents can also be mixed and used.

Examples of the lithium salt include LiPF₆, LiAsF₆, LiAlCl₄, LiClO₄, LiBF₄, LiSbF₆, LiCF₃SO₃, LiC₄F₉CO₃, LiC₄F₉SO₃, LiC(CF₃SO₂)₃, LiN(CF₃SO₂)₂, LiN(C₂F₅SO₂)₂, LiB₁₀Cl₁₀, lower aliphatic lithium carboxylates, chloroborane lithium, lithium tetraphenylborate, LiBr, LiI, LiSCN, LiCl, imides, quaternary ammonium salts, and boron fluorides. One of these lithium salts may be used, or two or more of these lithium salts may be used in combination.

The concentration of the lithium salt that is the electrolyte can be set, for example, to 0.2 to 2 mol/L. By setting the concentration of the lithium salt to 0.2 mol/L or more, sufficient electrical conductivity can be obtained. In addition, by setting the concentration of the lithium salt to 2 mol/L or less, an increase in density and viscosity can be suppressed. Instead of the electrolytic solution, a polymer electrolyte may be used.

As the negative electrode active material, materials capable of intercalating and releasing lithium can be used. As the negative electrode active material, for example, the active material for a secondary battery according to this exemplary embodiment, carbon materials, such as graphite, hard carbon, and amorphous carbon, Li metal, Si, Sn, Al, Si oxides, such as SiO, Sn oxides, Li₄Ti₅O₁₂, Ti oxides, such as TiO₂, V-containing oxides, Sb-containing oxides, Fe-containing oxides, and Co-containing oxides can be used. These negative electrode active materials can be used alone, or mixed and used. In the secondary battery according to this exemplary embodiment, the negative electrode active material preferably contains graphite.

The negative electrode can be fabricated by mixing the above negative electrode active material, a conductivity-providing agent, and a binding agent, and applying the mixture onto a negative electrode current collector. As the conductivity-providing agent, for example, carbon materials as well as powders of conductive oxides can be used. As the binding agent, polyvinylidene fluoride (PVDF) and the like can be used. As the negative electrode current collector, metal thin films mainly containing Al, Cu, and the like can be used.

The secondary battery according to this exemplary embodiment can be manufactured by assembling using an electrode for a secondary battery containing the active material for a secondary battery according to this exemplary embodiment. For example, a positive electrode for a secondary battery containing the active material for a secondary battery according to this exemplary embodiment and a negative electrode are disposed opposed to each other via a separator without electrical contact. As the separator, microporous films containing polyethylene, polypropylene (PP), polyimides, polyamides, and the like can be used.

The above positive electrode and negative electrode disposed opposed to each other with the separator sandwiched therebetween are formed in a cylindrical or laminated form. They are housed in an outer package, and immersed in an electrolytic solution so that both of the positive electrode active material and the negative electrode active material are in contact with the electrolytic solution. A positive electrode tab and a negative electrode tab maintaining electrical contact with the positive electrode and the negative electrode, respectively, are connected to the positive electrode and the negative electrode, respectively, so that these electrode tabs lead to the outside of the outer package, and the outer package is sealed. Thus, the secondary battery can be fabricated.

The battery shape of the secondary battery according to this exemplary embodiment is not limited, and the positive electrode and the negative electrode disposed opposed to each other with the separator sandwiched therebetween can take a form such as a wound type or a laminated type. In addition, the form of the cell can be a coin type, a laminate type, or the like. The shape of the cell can be a square type, a cylindrical type, or the like.

### Examples

### [Example 1]

### (Preparation of Positive Electrode Active Material)

As a positive electrode active material, LiNi_{0.5}Mn_{1.348}Ti_{0.15}Li_{0.002}O₄ was prepared. As raw materials, MnO₂, NiO, TiO₂, and Li₂CO₃ were weighed so as to provide a target metal composition ratio, and ground and mixed. The powder after the raw material mixing was fired at 950°C for 8 hours, and then slowly cooled. According to X-ray diffraction evaluation, all peaks obtained were attributed to a spinel structure, and therefore, it was confirmed that the obtained positive electrode active material was of substantially single-phase spinel structure.

### (Fabrication of Positive Electrode)

The prepared positive electrode active material and carbon that was a conductivity-providing agent were mixed. This mixture was dispersed in N-methylpyrrolidone in which polyvinylidene fluoride (PVDF) that was a binding agent was dissolved, to provide a slurry. The mass ratio of the positive electrode active material, the conductivity-providing agent, and the binding agent was 92/4/4. The slurry was applied onto an Al current collector. The thickness of the applied film was adjusted so that the initial charge capacity of the positive electrode was 2.5 mAh/cm². Then, the applied film on the Al current collector was dried in a vacuum for 12 hours to provide a positive electrode material. The positive electrode material was pressure-formed at 3 t/cm² to prepare a positive electrode.

### (Fabrication of Negative Electrode)

Graphite was used for a negative electrode active material. A slurry was prepared with a mass ratio of the negative electrode active material to the binding agent of 92/8, and the slurry was applied onto a Cu current collector, by a method similar to that of the above positive electrode. The thickness of the applied film was adjusted so that the initial charge capacity of the negative electrode was 3.0 mAh/cm². Then, the applied film on the Cu current collector was dried in a vacuum for 12 hours to provide a negative electrode material. After the drying, the negative electrode material was pressure-formed at 1 t/cm² to prepare a negative electrode.

### (Fabrication of Laminate Type Secondary Battery)

The fabricated positive electrode and negative electrode were cut into a length of 20 mm and a width of 20 mm. A film of PP was used for a separator. The positive electrode and the negative electrode were disposed opposed to each other via the separator, and disposed in a laminate, and the laminate was filled with an electrolytic solution and sealed. For the electrolytic solution, a solution obtained by dissolving 1 mol/l of LiPF₆ as an electrolyte in a mixed solvent of EC/DMC = 3/7 (% by volume) was used. Thus, a laminate type secondary battery was fabricated.

### (Measurement of Capacity Retention Rate)

As secondary battery life evaluation, the capacity retention rate was measured. The fabricated laminate type secondary battery was subjected to constant current charge at a charge rate of 1 C to 4.8 V, and after 4.8 V was reached, the laminate type secondary battery was charged at a constant voltage. Adjustment was performed so that the total of charge time was 2.5 hours. After the completion of the charge, the laminate type secondary battery was discharged at a constant current of 1 C to 3 V. This charge and discharge was repeated in a 45°C thermostat bath 200 times, and the ratio of discharge capacity after 200 times to the first discharge capacity was calculated as the capacity retention rate. The result is shown in Table 1.

### [Examples 2 to 42 and Comparative Examples 1 to 11]

Positive electrode active materials with compositions shown in Tables 1 to 3 were prepared by a method similar to that of Example 1, and evaluated as in Example 1. The results are shown in Tables 1 to 3. As the raw material of Mn, MnO₂ was used. As the raw material of Ni, NiO was used. As the raw material of Ti, TiO₂ was used. As the raw material of Li, Li₂CO₃ was used. As the raw material of Mg, Mg(OH)₂ was used. As the raw material of Na, NaOH was used. As the raw material of Al, Al(OH)₃ was used. As the raw material of B, B₂O₃ was used. As the raw material of K, KOH was used. As the raw material of Ca, Ca(OH)₂ was used. As the raw material of Si, SiO was used. In addition, for the positive electrode active materials of the Examples and the Comparative Examples, X-ray diffraction evaluation was performed, and for the positive electrode active materials of all Examples and Comparative Examples, all peaks obtained were attributed to a spinel structure. Thus, it was confirmed that all positive electrode active materials obtained were of substantially single-phase spinel structure.

[Table 1]

**[Table 1]**

| | Positive electrode active material | Capacity retention rate |
|---|---|---|
| Example 1 | LiNi_{0.5}Mn_{1.348}Ti_{0.15}Li_{0.002}O₄ | 70% |
| Example 2 | LiNi_{0.5}Mn_{1.34}Ti_{0.15}Li_{0.01}O₄ | 72% |
| Example 3 | LiNi_{0.5}Mn_{1.33}Ti_{0.15}Li_{0.02}O₄ | 71% |
| Example 4 | LiNi_{0.5}Mn_{1.448}Ti_{0.05}Na_{0.001}O₄ | 70% |
| Example 5 | LiNi_{0.5}Mn_{1.44}Ti_{0.05}Na_{0.01}O₄ | 71% |
| Example 6 | LiNi_{0.5}Mn_{1.41}Ti_{0.05}Na_{0.02}O₄ | 71% |
| Example 7 | LiNi_{0.5}Mn_{1.44}Ti_{0.05}B_{0.01}O₄ | 73% |
| Example 8 | LiNi_{0.5}Mn_{1.43}Ti_{0.05}B_{0.02}O₄ | 70% |
| Example 9 | LiNi_{0.5}Mn_{1.44}Ti_{0.05}Al_{0.01}O₄ | 73% |
| Example 10 | LiNi_{0.5}Mn_{1.43}Ti_{0.05}Al_{0.02}O₄ | 72% |
| Example 11 | LiNi_{0.5}Mn_{1.425}Ti_{0.05}Al_{0.025}O₄ | 71% |
| Example 12 | LiNi_{0.5}Mn_{1.41}Ti_{0.02}Al_{0.02}O₄ | 70% |
| Example 13 | LiNi_{0.5}Mn_{1.38}Ti_{0.1}Al_{0.02}O₄ | 72% |
| Example 14 | LiNi_{0.5}Mn_{1.33}Ti_{0.15}Al_{0.02}O₄ | 75% |
| Example 15 | LiNi_{0.5}Mn_{1.28}Ti_{0.2}Al_{0.02}O₄ | 74% |
| Example 16 | LiNi_{0.5}Mn_{1.23}Ti_{0.25}Al_{0.02}O₄ | 70% |
| Example 17 | LiNi_{0.5}Mn_{1.43}Si_{0.05}Al_{0.02}O₄ | 74% |
| *Example 18 | LiNi_{0.5}Mn_{1.44}Ti_{0.05}Mg_{0.01}O₄ | 76% |
| *Example 19 | LiNi_{0.5}Mn_{1.43}Ti_{0.05}Mg_{0.02}O₄ | 76% |
| *Example 20 | LiNi_{0.5}Mn_{1.425}Ti_{0.05}Mg_{0.025}O₄ | 74% |

[Table 2]

**[Table 2]**

| | Positive electrode active material | Capacity retention rate |
|---|---|---|
| *Example 21 | LiNi_{0.5}Mn_{1.44}Ti_{0.02}Mg_{0.02}O₄ | 70% |
| *Example 22 | LiNi_{0.5}Mn_{1.43}Ti_{0.05}Mg_{0.02}O₄ | 73% |
| *Example 23 | LiNi_{0.5}Mn_{1.38}Ti_{0.1}Mg_{0.02}O₄ | 75% |
| *Example 24 | LiNi_{0.5}Mn_{1.33}Ti_{0.15}Mg_{0.02}O₄ | 76% |
| *Example 25 | LiNi_{0.5}Mn_{1.28}Ti_{0.2}Mg_{0.02}O₄ | 73% |
| *Example 26 | LiNi_{0.5}Mn_{1.18}Ti_{0.3}Mg_{0.02}O₄ | 70% |
| *Example 27 | LiNi_{0.5}Mn_{1.43}Si_{0.05}Mg_{0.02}O₄ | 71% |
| Example 28 | LiN_{0.5}Mn_{1.39}Ti_{0.1}K_{0.01}O₄ | 71% |
| Example 29 | LiNi_{0.5}Mn_{1.39}Ti_{0.1}Ca_{0.01}O₄ | 71% |
| Example 30 | LiNi_{0.5}Mn_{1.32}Ti_{0.15}Li_{0.03}O₄ | 68% |
| Example 31 | LiNi_{0.5}Mn_{1.42}Ti_{0.05}Na_{0.03}O₄ | 67% |
| Example 32 | LiNi_{0.5}Mn_{1.41}Ti_{0.05}Na_{0.04}O₄ | 67% |
| Example 33 | LiNi_{0.5}Mn_{1.42}Ti_{0.05}B_{0.03}O₄ | 68% |
| Example 34 | LiNi_{0.5}Mn_{1.42}Ti_{0.05}Mg_{0.03}O₄ | 68% |
| Example 35 | LiNi₀.₅Mn₁.₁₈Ti₀.₃Al_{0.02}O₄ | 67% |
| Example 36 | LiNi_{0.5}Mn_{1.13}Ti_{0.35}Al_{0.02}O₄ | 67% |
| Example 37 | LiNi_{0.5}Mn_{1.5}Si_{0.08}Na_{0.02}O₄ | 72% |
| Example 38 | LiNi_{0.5}Mn_{1.43}Si_{0.05}B_{0.02}O₄ | 72% |
| Example 39 | LiNi_{0.5}Mn_{1.46}Si_{0.03}K_{0.01}O₄ | 72% |
| Example 40 | LiNi_{0.5}Mn_{1.46}Si_{0.03}Ca_{0.01}O₄ | 72% |
| Example 41 | LiNi_{0.5}Mn_{1.33}Ti_{0.15}Al_{0.02}O_{3.98}F_{0.02} | 74% |
| *Example 42 | LiNi_{0.5}Mn_{1.38}Ti_{0.1}Mg_{0.02}O₃.₉₆F_{0.04} | 74% |

[Table 3]

**[Table 3]**

| | Positive electrode active material | Capacity retention rate |
|---|---|---|
| Comparative Example 1 | LiNi_{0.5}Mn_{1.5}O₄ | 58% |
| Comparative Example 2 | LiNi_{0.5}Mn_{1.45}Ti_{0.05}O₄ | 64% |
| Comparative Example 3 | LiNi_{0.5}Mn_{1.35}Ti_{0.15}O₄ | 64% |
| Comparative Example 4 | LiNi_{0.5}Mn_{1.45}Si_{0.05}O₄ | 64% |
| Comparative Example 5 | LiNi_{0.49}Mn_{1.49}Mg_{0.02}O₄ | 62% |
| Comparative Example 6 | LiNi_{0.49}Mn_{1.49}Al_{0.02}O₄ | 61% |
| Comparative Example 7 | LiNi_{0.49}Mn_{1.49}B_{0.02}O₄ | 62% |
| Comparative Example 8 | LiNi_{0.49}Mn_{1.49}Na_{0.02}O₄ | 60% |
| Comparative Example 9 | LiNi_{0.5}Mn_{1.42}Ti_{0.05}Al_{0.03}O₄ | 64% |
| Comparative Example 10 | LiNi_{0.45}Mn_{1.5}Li_{0.05}O₄ | 54% |
| Comparative Example 11 | LiNi_{0.5}Mn_{1.45}Li_{0.05}O₄ | 52% |

The Examples marked with * are Reference Examples and do not form part of the invention.

As shown in Examples 1 to 42, when the above formula (I) or (II) was satisfied, an improvement in life characteristics was confirmed. On the other hand, as shown in Comparative Examples 1 to 11, when neither of the above formulas (I) and (II) was satisfied, the life improvement effect was insufficient. It is presumed that by satisfying the above formula (I) or (II), the crystallinity of the active material increased, and effects such as a decrease in the elution of the constituent elements, a decrease in oxygen release at the active material surface, and a decrease in the decomposition of the electrolytic solution at the active material interface were exhibited.

As shown in Examples 12 to 16 and Examples 21 to 26, it was confirmed that when the composition y1 of M1 in the above formula (I) and the composition y2 of M3 in the above formula (II) were within the range of larger than 0 and 0.3 or less, the life characteristics were further improved.

As shown in Examples 1 to 3 and 30, Examples 4 to 6, 31, and 32, and Examples 7, 8, and 33, and the like, it was confirmed that when the composition z1 of M2 in the above formula (I) was within the range of larger than 0 and less than 0.03, the life characteristics were further improved.

### [Examples 43 to 45 and Comparative Examples 12 to 14]

Positive electrode active materials with compositions shown in Table 4 were prepared by a method similar to that of Example 1. In addition, negative electrodes were fabricated by a method similar to that of Example 1] except that as the negative electrode active material, negative electrode active materials shown in Table 4 were used. In addition, using these, laminate type secondary batteries were fabricated and evaluated as in Example 1. The results are shown in Table 4.

[Table 4]

**[Table 4]**

| | Positive electrode active material | Negative electrode active material | Capacity retention rate |
|---|---|---|---|
| Example 43 | LiNi_{0.5}Mn_{1.34}Ti_{0.15}Na_{0.01}O₄ | SiO | 67% |
| Comparative Example 12 | LiNi_{0.5}Mn_{1.5}O₄ | SiO | 50% |
| Example 44 | LiNi_{0.5}Mn_{1.3}Ti_{0.19}Mg_{0.01}O₄ | Hard carbon | 82% |
| Comparative Example 13 | LiNi_{0.5}Mn_{1.4}Si_{0.1}O₄ | Hard carbon | 64% |
| Example 45 | LiNi_{0.5}Mn_{1.39}Ti_{0.1}Al_{0.01}O₄ | Li₄Ti₅O₁₂ | 88% |
| Comparative Example 14 | LiNi_{0.5}Mn_{1.45}Ti_{0.05}O₄ | Li₄Ti₅O₁₂ | 75% |

As shown in Table 4, it was confirmed that also in the cases where the negative electrode active material was a material other than graphite, by using, as the positive electrode active material, positive electrode active materials satisfying the above formula (I), the life characteristics were improved.

### [Reference 46]

### (Fabrication of Positive Electrode)

As a positive electrode active material, LiNi_{0.4}Mn_{1.48}Ti_{0.1}Mg_{0.02}O₄ was prepared by a method similar to that of Example 1. According to X-ray diffraction evaluation, all peaks obtained were attributed to a spinel structure, and therefore, it was confirmed that the obtained positive electrode active material was of substantially single-phase spinel structure. In addition, using the positive electrode active material, a positive electrode was fabricated by a method similar to that of Example 1.

### (Fabrication of Coin Type Secondary Battery)

The above positive electrode was cut into a circle with a diameter of 12 mm. Using the positive electrode, a separator containing a film of PP with a diameter of 18 mm, and a negative electrode containing Li metal with a diameter of 15 mm and a thickness of 1.4 mm, a 2320 type coin type secondary battery was fabricated. Specifically, the above positive electrode and the above negative electrode were disposed opposed to each other via the above separator, and disposed in a laminate, and the laminate was filled with an electrolytic solution and sealed. For the electrolytic solution, a solution obtained by dissolving 1 mol/l of LiPF₆ as an electrolyte in a mixed solvent of EC/DMC = 3/7 (% by volume) was used.

### (Measurement of Discharge Energy per Mass of Active Material)

The above coin type secondary battery was charged at a charge rate of 0.05 C to 5.0 V, and discharged at a rate of 0.05 C to 3 V. The discharge energy per the mass of the positive electrode active material [Wh/kg] at this time was measured. The result is shown in Table 5.

### [Reference 47 to 52]

Positive electrode active materials with compositions shown in Table 5 were prepared by a method similar to that of Example 46, and evaluated as in Example 46. The results are shown in Table 5. The composition of the positive electrode active material of Example 48 is the same as that of the positive electrode active material of Example 23. In addition, for the positive electrode active materials of the Examples and the Comparative Examples, X-ray diffraction evaluation was performed, and for the positive electrode active materials of all Examples and Comparative Examples, all peaks obtained were attributed to a spinel structure. Thus, it was confirmed that all positive electrode active materials obtained were of substantially single-phase spinel structure.

[Table 5]

**[Table 5]**

| | Positive electrode active material | Discharge energy per mass of active material [Wh/kg] |
|---|---|---|
| Example 46 | LiNi_{0.4}Mn_{1.48}Ti_{0.1}Mg_{0.01}O₄ | 574 |
| Example 47 | LiNi_{0.45}Mn_{1.43}Ti_{0.1}Mg_{0.02}O₄ | 592 |
| Example 48 | LiNi_{0.5}Mn_{1.38}Ti_{0.1}Mg_{0.02}O₄ | 618 |
| Example 49 | LiNi_{0.55}Mn_{1.33}Ti_{0.1}Mg_{0.02}O₄ | 586 |
| Example 50 | LiNi_{0.6}Mn_{1.28}Ti_{0.1}Mg_{0.02}O₄ | 535 |
| Example 51 | LiNi_{0.35}Mn_{1.53}Ti_{0.1}Mg_{0.02}O₄ | 496 |
| Example 52 | LiNi_{0.65}Mn_{1.23}Ti_{0.1}Mg_{0.02}O₄ | 460 |

As shown in Table 5, it was confirmed that from the viewpoint of energy density, the Ni composition x1 in the above formula (I) and the Ni composition x2 in the above formula (II) were preferably 0.4 or more and 0.6 or less.

This application claims priority to Japanese Patent Application No. 2011-120143 filed May 30, 2011, the entire disclosure of which is incorporated herein.

While the invention of this application has been described with reference to the exemplary embodiment and the Examples, the invention of this application is not limited to the above exemplary embodiment and Examples. Various changes that can be understood by those skilled in the art can be made in the configuration and details of the invention of this application within the scope of the invention of this application.

### Industrial Applicability

The secondary battery according to this exemplary embodiment is preferably used for cellular phones, notebook computers, electric cars, electric bicycles, electric motorcycles, uninterruptible power supplies, electric tools, digital cameras, portable music equipment, and the like.

### Reference Signs List

- 1: positive electrode active material layer
- 2: negative electrode active material layer
- 3: positive electrode current collector
- 4: negative electrode current collector
- 5: separator
- 6, 7: outer package laminate
- 8: negative electrode tab
- 9: positive electrode tab

## Claims

1. An active material for a secondary battery represented by the following formula (I):
Liₐ₁(Niₓ₁Mn_{2-x-y1-z1}M1_{y1}M2_{z1})O₄ (I)
wherein 0.4 ≤ x1 ≤ 0.6, 0 < y1, 0 < z1, x1 + y1 + z1 < 2, and 0 ≤ a1 ≤ 1.2; M1 is at least one selected from Si and Ti; and M2 is at least one selected from Li, B, Na, K, and Ca.

2. The active material for a secondary battery according to claim 1, wherein in the formula (1), y1 satisfies 0 < y1 ≤ 0.3.

3. The active material for a secondary battery according to claim 1 or 2, wherein in the formula (I), z1 satisfies 0 < z1 < 0.03.

4. The active material for a secondary battery according to any one of claims 1, 2, and 3, wherein in the formula (I), a ratio of x1 to z1 (x1/z1) is 20 ≤ x1/z ≤ 1000.

5. The active material for a secondary battery according to any one of claims 1 to 4, wherein in the formula (I), a ratio of y1 to z1 (y1/z1) is 6 ≤ y1/z1 ≤ 1000.

6. The active material for a secondary battery according to any one of claims 1] to 5, wherein in the formula (I), a ratio of x1 to y1 (x1/y1) is 3 ≤ x1/y1 ≤ 1000.

7. The active material for a secondary battery according to any one of claims 1] to 6, wherein in the formula (I), M1 is Ti.

8. The active material for a secondary battery according to claim 7, wherein in the formula (I), M2 is at least one selected from Na, K, and Ca.

9. The active material for a secondary battery according to any one of claims 1] to 6, wherein in the formula (I), M1 is Si.

10. The active material for a secondary battery according to claim 9, wherein in the formula (1), M2 is at least one selected from Li, Na, K, and Ca.

11. A secondary battery comprising the active material for a secondary battery according to any one of claims 1] to 10.

12. The secondary battery according to claim 11, comprising a negative electrode active material for a secondary battery comprising graphite.

## Patentansprüche

1. Aktivmaterial für eine Sekundärbatterie, das durch die folgende Formel (I) dargestellt wird:
Liₐ₁(Niₓ₁Mn_{2-x1-y1-z1}M1_{y1}M2_{z1})O₄ (I)
wobei 0,4 ≤ x1 ≤ 0,6, 0 < y1, 0 < z1, x1 + y1 + z1 < 2, und 0 ≤ a1 ≤ 1,2; M1 mindestens eines ausgewählt aus Si und Ti ist; und M2 mindestens eines ausgewählt aus Li, B, Na, K, und Ca ist.

2. Aktivmaterial für eine Sekundärbatterie gemäß Anspruch 1, wobei in der Formel (I) y1 0 < y1 ≤ 0,3 erfüllt.

3. Aktivmaterial für eine Sekundärbatterie gemäß Anspruch 1 oder 2, wobei in der Formel (I) z1 0 < z1 < 0,03 erfüllt.

4. Aktivmaterial für eine Sekundärbatterie gemäß einem der Ansprüche 1, 2 und 3, wobei in der Formel (I) ein Verhältnis von x1 zu z1 (x1/z1) 20 ≤ x1/z1 ≤ 1000 erfüllt.

5. Aktivmaterial für eine Sekundärbatterie gemäß einem der Ansprüche 1 bis 4, wobei in der Formel (I) ein Verhältnis von y1 zu z1 (y1/z1) 6 ≤ y1/z1 ≤ 1000 erfüllt.

6. Aktivmaterial für eine Sekundärbatterie gemäß einem der Ansprüche 1 bis 5, wobei in der Formel (I) ein Verhältnis von x1 zu y1 (x1/y1) 3 ≤ x1/y1 ≤ 1000 erfüllt.

7. Aktivmaterial für eine Sekundärbatterie gemäß einem der Ansprüche 1] bis 6, wobei in der Formel (I) M1 Ti ist.

8. Aktivmaterial für eine Sekundärbatterie gemäß Anspruch 7, wobei in der Formel (I) M2 mindestens eines ausgewählt aus Na, K und Ca ist.

9. Aktivmaterial für eine Sekundärbatterie gemäß einem der Ansprüche 1 bis 6, wobei in der Formel (I) M1 Si ist.

10. Aktivmaterial für eine Sekundärbatterie gemäß Anspruch 9, wobei in der Formel (I) M2 mindestens eines ausgewählt aus Li, Na, K und Ca ist.

11. Sekundärbatterie, die das Aktivmaterial für eine Sekundärbatterie gemäß einem der Ansprüche 1 bis 10 umfasst.

12. Sekundärbatterie gemäß Anspruch 11, die ein Aktivmaterial für eine negative Elektrode einer Sekundärbatterie, die Graphit umfasst, umfasst.

## Revendications

1. Matériau actif pour une batterie secondaire représenté par la formule (I) suivante :
Liₐ₁ (Niₓ₁Mn_{2-x-1-y1-z1}M1_{y1}M2_{z1})O₄ (I)
où 0,4 ≤ x1 0,6, 0 < y1, 0 < z1, x1 + y1 + z1 < 2, et 0 ≤ a1 ≤ 1,2 ; M1 est au moins un élément choisi parmi Si et Ti ; et M2 est au moins un élément choisi parmi Li, B, Na, K et Ca.

2. Matériau actif pour une batterie secondaire selon la revendication 1, dans lequel, dans la formule (I), y1 satisfait à la relation 0 < y1 < 0,3.

3. Matériau actif pour une batterie secondaire selon la revendication 1 ou 2, dans lequel, dans la formule (I), z1 satisfait 0 < z1 < 0,03.

4. Matériau actif pour une batterie secondaire selon l'une quelconque des revendications 1, 2 et 3, dans lequel, dans la formule (I), un rapport entre x1 et z1 (x1/z1) est 20 ≤ x1/z1 ≤ 1 000.

5. Matériau actif pour une batterie secondaire selon l'une quelconque des revendications 1 à 4, dans lequel, dans la formule (I), un rapport entre y1 et z1 (y1/z1) est 6 ≤ y1/z1 ≤ 1 000.

6. Matériau actif pour une batterie secondaire selon l'une quelconque des revendications 1 à 5, dans lequel, dans la formule (I), un rapport entre x1 et y1 (x1/y1) est 3 ≤ x1/y1 ≤ 1 000.

7. Matériau actif pour une batterie secondaire selon l'une quelconque des revendications 1 à 6, dans lequel, dans la formule (I), M1 est Ti.

8. Matériau actif pour une batterie secondaire selon la revendication 7, dans lequel, dans la formule (I), M2 est au moins un élément choisi parmi Na, K et Ca.

9. Matériau actif pour une batterie secondaire selon l'une quelconque des revendications 1 à 6, dans lequel, dans la formule (I), M1 est Si.

10. Matériau actif pour une batterie secondaire selon la revendication 9, dans lequel, dans la formule (I), M2 est au moins un élément choisi parmi Li, Na, K et Ca.

11. Batterie secondaire comprenant le matériau actif pour une batterie secondaire selon l'une quelconque des revendications 1 à 10.

12. Batterie secondaire selon la revendication 11, comprenant un matériau actif d'électrode négative pour une batterie secondaire comprenant du graphite.
